# EUROPEAN PATENT APPLICATION

(11) **EP 4 653 371 A1**
(43) Date of publication of application: **26.11.2025**
(21) Application number: 25175776.1
(22) Date of filing: 12.05.2025
(51) Int. Cl.: B66C 1/02

(54) **SUCTION CUP COMPRISING A LIP HAVING IN A RIM PORTION A POLYMERIC MATERIAL OF REDUCED HARDNESS**

(30) Priority: 22.05.2024 EP 24177326
(71) Applicant: Piab Aktiebolag, 182 12 Danderyd (SE)
(72) Inventor: MOBERG, Johan, 182 12 Danderyd (SE); HERRSTRÖM, Jonas, 182 12 Danderyd (SE)
(74) Representative: Brann AB

(57) **Abstract**

A suction cup (10) for automated gripping operations, such as for lifting of objects, is disclosed, wherein a rim portion (30) of a lip (20) of the suction cup (10) is made of a first polymeric material having a first lower hardness as compared to a second hardness of a second polymeric material of an inner, central portion (40) of the lip (20). The first and second polymeric materials of the lip (20) of the suction cup (10) disclosed are bonded to each other with an overlap (50). The bonding can be accomplished by injection moulding of the suction cup.

## Description

### FIELD OF THE INVENTION

The present invention generally relates to suction cups for automated gripping operations, such as for lifting objects, and more particularly to a suction cup, wherein a rim portion of a lip of the suction cup is made of a first polymeric material having a lower hardness as compared to a second polymeric material from which a central portion of the lip is made. The first and second polymeric materials of the lip of the suction cup are bonded to each other with an overlap. The bonding can be accomplished by means of injection moulding.

### BACKGROUND ART

Suction cups are well-known in the art of automated gripping operations. Such suction cups are intended to be fluidly connected to a source of vacuum.

EP 2 411 314 discloses suction cups having replaceable sealing surfaces, such that, for example, the lip of the suction cup can be replaced. The lip may suitably be snap-fitted to the body of the suction cup, e.g. to a bellows.

In some applications it would be desirable to have a lip made from a polymeric material different from that of the remaining suction cup, for example when different properties, e.g. in terms of flexibility, of the polymeric material of the lip are desired as compared to those of the polymeric material of the remaining suction cup.

A 2-component bellows suction cup made from silicone is available from Schmalz (DE) under the trade designation "Bellows Suction Cups PSPF", wherein a high-strength 2C connection of bellows and sealing lip is said to combine sophisticated material properties in one suction cup.

The present inventors have found that a problem that may arise when two polymeric materials are used and combined as in the prior art is that cracks may tend to form in the lip, thereby reducing the expected service life of the suction cup as compared to that of a suction cup wherein the lip is formed from the same polymeric material as the remaining suction cup to which the lip is connected, e.g. a bellows. The whole suction cup must then be replaced. If not replaced, the cracks may finally run through the polymeric material and parts of the lip risk being detached, and objects risk being gripped in a faulty manner, which may lead to damages on the objects being faulty gripped.

It would be desirable to provide a suction cup having a lip made from a different polymeric material than the remaining suction cup while reducing or avoiding formation of cracks.

According to the present invention, the above object has been achieved by means of a suction cup of independent claim 1 comprising a lip, wherein an outer rim portion of the lip is made from a polymeric material having a reduced hardness as compared to a hardness of a polymeric material of a central portion of the lip, and extends in a direction radially inwards, so as to partly overlap with the inner central portion of the lip, and wherein the outer rim portion and the central portion in the area of the overlap are bonded to each other. The bonding of the two materials can conveniently be accomplished by means of injection moulding.

### SUMMARY OF THE INVENTION

Accordingly, in a first aspect, the present invention relates to a suction cup **10** for use in automated gripping operations configured to be fluidly connected to a source of vacuum (not shown), comprising a first polymeric material of a first hardness, and a lip **20** having an outer rim portion **40** made of a second polymeric material of a second hardness, which is lower than that of the first polymeric material, wherein the lip **20** exhibits an inner, central portion **30** made of the first polymeric material, the outer rim portion **40** of the lip **20** extends radially inwards, thereby forming an area of an overlap **50** with the inner, central portion **30** of the lip **20** on an upper side **35** or on a lower side **37** of the inner, central portion **30** of the lip **20,** and, in that, in said area of the overlap **50,** the first and second polymeric materials are bonded to each other.

By virtue of the inventive overlap, an increased area of bonding is obtained as compared to the prior art, wherein an overlap **50** is not provided, and wherein bonding is obtained merely in a boundary layer along the rim in a region wherein the two different polymeric materials meet and are adjoined with each other.

Also, by virtue of the inventive overlap **50,** flexing of the outer rim portion **40** having the lower hardness will be brought about within the same polymeric material without including tensile forces acting on an interface surface between the two different first and second polymeric materials. With the present invention, undesired flexing in the bonding surface between two different polymeric materials can be avoided.

By virtue of the inventive overlap **50,** a softer polymeric material can be used for the polymeric material having the lower hardness as compared to when only edge bonding along a cross-section of the lip/bellows, such as in the prior art, is present. The enhanced bonding surface **50** can also compensate for a reduced bonding capacity of a softer polymeric material, e.g. due to presence of a plasticiser in such softer material.

Also, in the area of the inventive overlap **50,** the underlying or overlying harder polymeric material of the inner, central portion **30** can also serve as a stabilizer of the overall lip **20,** such that flexing in an inner, central portion **30** of the lip **20** is reduced.

By virtue of the inventive overlap **50,** the outer rim portion **40** of the lip **20** can be made thinner.

By virtue of the inventive overlap **50,** the lip **20** can be provided with a natural/intended flexing area located within one and the same softer polymeric material.

The inventive use of two different polymeric materials for the lip **20** including an overlap **50** facilitates providing a lip **20** having differentiated properties, primarily in terms of flexibility, along a radial direction of the lip, from a harder central, inner portion **30,** to a softer outer rim portion **40.** The suppleness of the lip **20** and sealing ability of the lip **20** can also be made so as to increase going in a radial direction from the harder central, inner portion **30,** to the softer outer rim portion **40.**

By virtue of the inventive overlap, an improved service-life of the lip can be obtained.

The inventive suction cup **10** is suitably prepared using injection moulding, such as e.g. 2-component injection moulding.

It is generally preferred that the area of the overlap **50** with the central portion **30** of the lip **20** is formed on the upper side **35** of the central portion **30** of the lip **20.**

Accordingly, in a second aspect, the present invention relates to a method of producing a suction cup **10** having a lip **20,** wherein the lip **20** is formed from two different polymeric materials, using 2-component injection moulding, wherein a second polymeric material having a second hardness is injected into a cavity containing an inner, central portion **30** of the lip **20** made of a first polymeric material having a first hardness, on an upper side **35** of the central portion **30** of the lip **20,** so as to form an area of overlap **50** of the two polymeric materials, the second hardness being lower than the first hardness, thereby bonding the two polymeric materials to each other in said area of the overlap **50.**

In alternative embodiments the area of the overlap **50** with the central portion **30** of the lip **20** is formed on the lower side **37** of the central portion **30** of the lip **20.**

Accordingly, in a third aspect, the present invention relates to a method of producing a suction cup **10** having a lip **20,** wherein the lip **20** is formed from two different polymeric materials, using 2-component injection moulding, wherein a second polymeric material having a second hardness is injected into a cavity containing an inner, central portion **30** of the lip **20** made of a first material having a first hardness, on a lower side **37** of the central portion **30** of the lip **20,** so as to form an area of overlap **50** of the two polymeric materials, the second hardness being lower than the first hardness, thereby bonding the two polymeric materials to each other in said area of the overlap **50.**

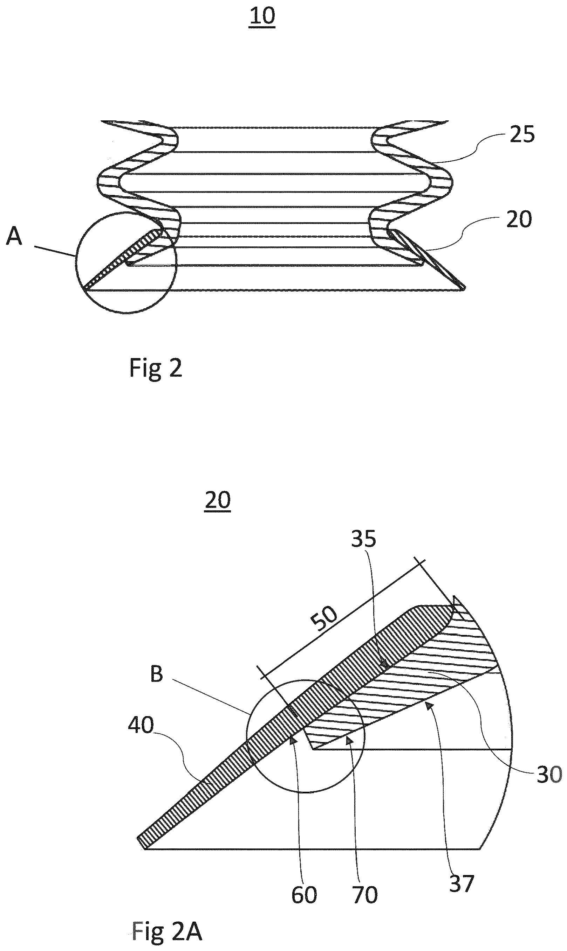

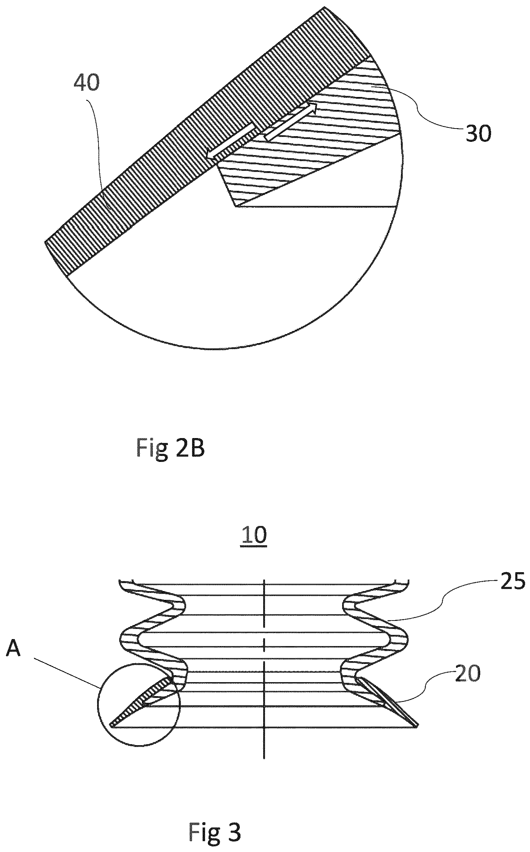

By virtue of the inventive overlap **50,** during flexing of the lip, there will, instead of tensile forces acting on a boundary layer of a prior art 2-component lip, be shearing forces acting on the boundary layer, as illustrated in **FIGS. 2B****,** **3A****,** and **4A****.**

Further embodiments and advantages of the invention will be apparent from the following detailed description and appended claims.

### BRIEF DESCRIPTION OF THE ATTACHED DRAWINGS

Figure 1 shows a cross-section of a suction cup **10** of the prior art, wherein an outer rim-portion of a lip **20** is bonded to an inner central lip-portion.
Figure 1A shows a partial view of detail A in **FIG.** 1, illustrating by way of arrows tensile forces acting on a boundary surface in a 2-component lip of the prior art.
Figure 2 shows a cross-section of an embodiment of a suction cup **10** of the invention, exhibiting a lip **20,** wherein an inner central lower surface **60** of the outer rim portion **40** extends essentially in parallel with the upper side **35** of the inner, central portion **30** of the lip **20.** In the embodiment shown, the inventive overlap area **50** is formed on the upper side **35** of the inner, central portion **30** of lip **20.**
Figure 2A is an enlarged view of detail **A** in **FIG. 2****,** illustrating lip **20** of **FIG. 2****.**
Figure 2B is an enlarged view of detail **B** in **FIG. 2A****,** illustrating by way of arrows shear forces acting on the bonding surface of the inventive 2-component lip **20** shown in **FIG. 2** in the area of overlap **50.**
Figure 3 shows a cross-section of another embodiment of a suction cup **10** of the invention, exhibiting a lip **20** having an inner central lower surface **60** of the outer rim portion **40** essentially flush with an outer, lower surface **70** of the inner, central portion **30** of the lip **20.** In the embodiment shown, the inventive overlap area **50** is formed on the upper side **35** of the inner, central portion **30** of lip **20.**
Figure 3A is an enlarged view of detail **A in** **FIG. 3****,** illustrating by way of arrows shear forces acting on the bonding surface of the inventive 2-component lip **20** of **FIG. 3****.**
Figure 4 shows a cross-section of yet another embodiment of a suction cup **10** of the invention, wherein the inventive overlap area **50** is formed on the lower side **37** of the inner, central portion **30** of lip **20.**
Figure 4A is an enlarged view of detail **A** in **FIG. 4****,** illustrating by way of arrows shear forces acting on the bonding surface of the inventive 2-component lip **20** of **FIG. 4****.**
Figure 5 shows a bottom view of an embodiment of a suction cup **10** of the invention having cleats **80** provided on a lower surface of the lip **20** of the suction cup. In the embodiment shown, the inventive overlap area **50** is formed on the upper side **35** of the inner, central portion **30** of lip **20.**

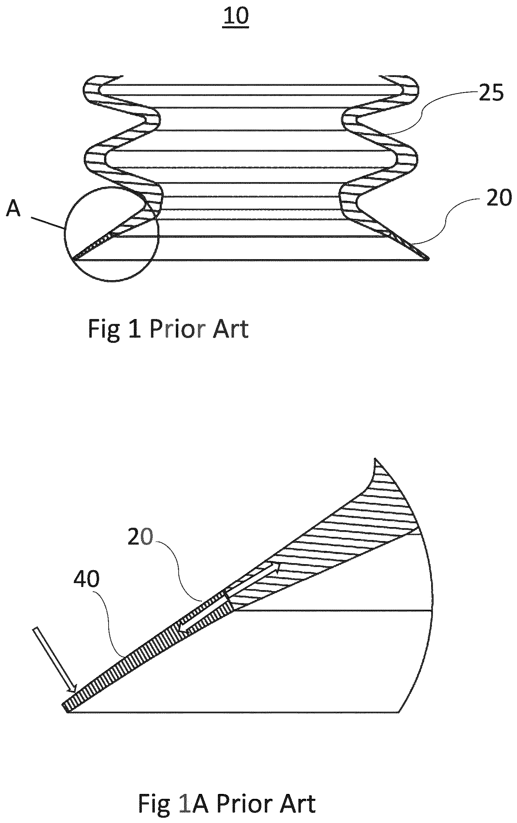

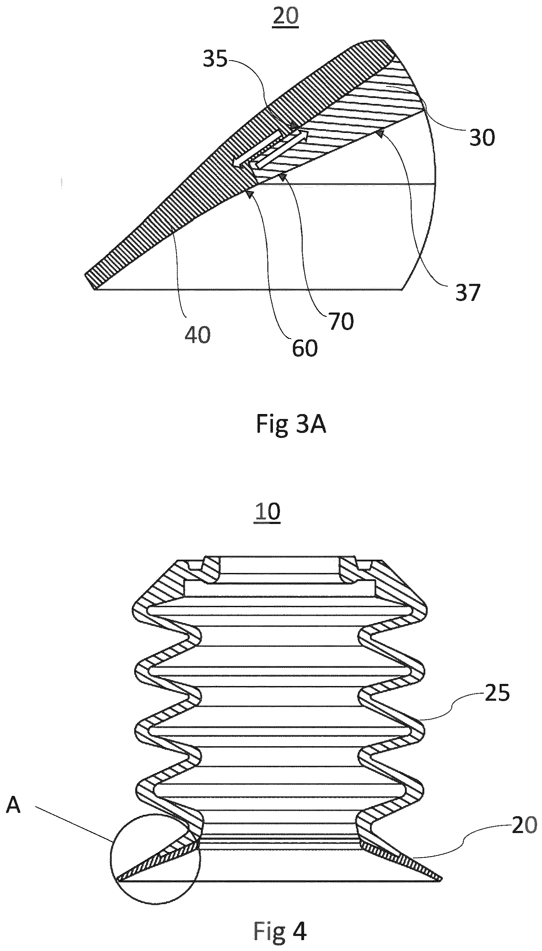

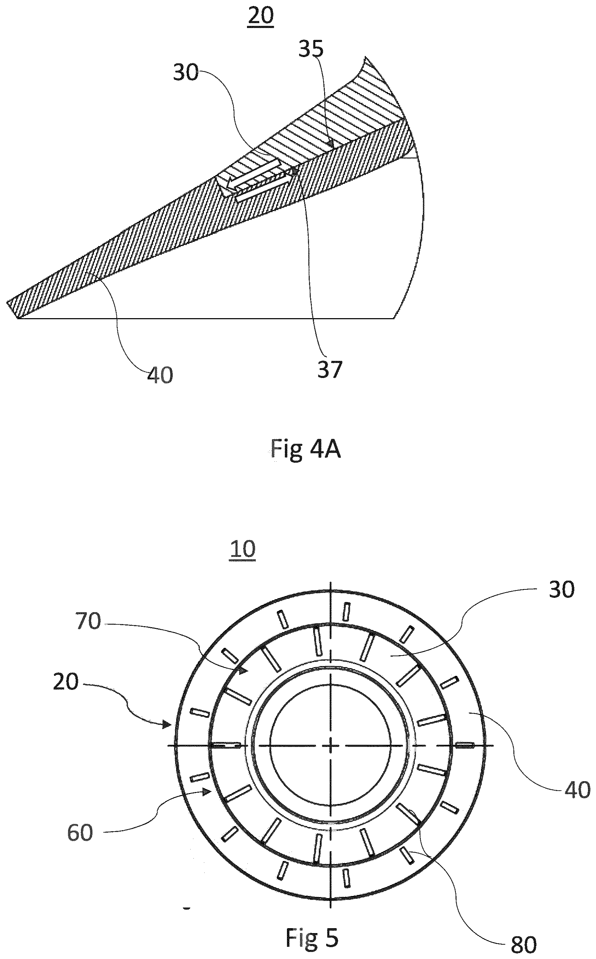

While an upper portion of the suction cups shown in **FIGS 1****,** **2****,** and **3****,** have been cut off, it will be evident to the skilled person that the cut off portion of said suction cups can e.g. be similar to the upper portion of the suction cup shown in **FIG 4****.**

### DETAILED DESCRIPTION OF THE INVENTION

In order for a suction cup, especially when including also a bellows, to be suitable for being used with a high fluid flow through the suction cup, the lip and bellows of the suction cup should be made of a polymeric material having a sufficient degree of hardness, such that the bellows and lip will be stable, and so as to reduce undesired sway of the suction cup under load, and also so as to prevent the bellows and lip from collapsing into itself, or inner surfaces from being brought into close proximity to each other thereby possibly adhering to each other. At the same time, for accomplishment of a desired sealing action also against a flexible material, such as e.g. to a pouch or plastic bag, the lip should be supple and flexible. The present invention conveniently allows for such combinations to be realized.

In a typical embodiment of the inventive suction cup, the inner, central portion **30** of the lip **20** is formed integrally with a bellows **25** from one and the same first polymeric material, while the outer rim portion **40** of the lip **20** is formed from a similar second polymeric material merely having a lower hardness than that of the first polymeric material.

The second polymeric material from which the outer rim portion **40** is formed preferably does not extend beyond the lip **20.** The area of overlap **50** of the first and second polymeric materials is consequently preferably essentially restricted to the lip **20,** e.g. such as shown in **FIGS 2-4****.**

The first and second polymeric materials of the inventive lip can be selected from elastomeric polymeric materials, preferably thermoplastic elastomers (TPEs). Generally, thermoplastic elastomers can be sub-divided into the following different categories; thermoplastic styrenic block copolymers (TPE-S), thermoplastic elastomer polyolefins (TPE-O), thermoplastic vulcanizates (TPE-V), thermoplastic polyurethane elastomers (TPE-U), thermoplastic copolyester elastomers (TPE-E), and thermoplastic polyamide elastomers (TPE-A). The presently preferred categories are TPE-S, TPE-V, and TPE-U, especially TPE-S. The first and second polymeric materials can be selected from different categories of the above listed categories, but should preferably be selected so that the composition of the first polymeric material and the composition of the second polymeric material have a category in common. As an example, the first polymeric material could be composed of a mixture of TPE-S and TPE-U, and the second polymeric material could be composed of TPE-S. More preferably, the first and second polymeric materials are selected from one and the same category.

Bonding of the first and second polymeric materials to each other in the area of the overlap can be accomplished by the process of injection moulding, preferably wherein the softer material is injected and bonded to the harder material. Any additional means for bonding the first and second polymeric materials to each other in the area of the overlap, e.g. mechanical or chemical, such as an adhesive, is not required and is preferably not used. The bonding in the area of the overlap is preferably the result of injection moulding, and more particularly a two component injection moulding process. No other bonding or otherwise adhering of the first and second polymeric materials to each other, other than in the area of the overlap, is required. Accordingly, in preferred embodiments, other bonding or otherwise adhering of the first and second polymeric materials to each other, other than in the area of the overlap, is absent. The bonding of the first and second polymeric materials to each other in the area of the overlap is intended to be permanent. Accordingly, the first and second polymeric materials should be permanently bonded to each other in the area of the overlap as a result of the moulding process, and should not be detachable from each other.

The nature of the bonding of the two polymeric materials is preferably melt bonding. The bonding is conveniently achieved by using 2-component injection moulding in two cavities, wherein the inner, central portion **30** of the lip **20** is formed in a first cavity, and the outer rim portion **40** of the lip **20** is thereafter formed in a second cavity, with a partial overlap over or under the inner, central portion **30** of the lip **20,** i.e. either with an overlap **50** on the upper side **35** or on the lower side **37.**

In order to improve the bonding strength, the surface area of the first polymeric material in the area of the overlap **50** can be enhanced, such as by means of a pattern, e.g. a zigzag pattern, formed in the area of the overlap of the first material. Alternatively, the surface of the first polymeric material in the area of the overlap **50,** can exhibit blind holes (not shown), into which the second polymeric material will enter during injection thereof. Thereby, anchors (not shown) of the second polymeric material can be formed in the first polymeric material, enhancing the adhesion of the polymeric materials to each other.

The two different polymeric materials can be made or selected so as to exhibit different colours, where the particular colour could e.g. be indicative of a certain hardness and/or of a certain category of TPE.

Cleats **80** may conveniently by provided on the inner, central portion **30** of the lip, and/or on the outer rim portion **40** of the lip **20,** especially the inner central lower surface **60** of the outer rim portion **40** of the lip **20,** such as e.g. shown in **FIG. 5****.** The cleats **80,** when present, will serve to secure a certain distance of central parts of the of the lower surface **60;70** of the lip **20** to an object to be gripped (not shown), thereby allowing for enhanced evacuation of the outer rim portion **40.**

The harder material of the central portion **30** of the lip **20,** and, typically also of a bellows, when a bellows is included, will typically be selected so as to exhibit a Shore A hardness of up to 100, such as e.g. within the range of 40-90, e.g. a Shore A hardness of about 60, while the softer material of the outer rim portion **40** of the lip **20** will typically be selected so as to exhibit a Shore A hardness within the range of 10-60, e.g. a Shore A hardness of about 30. Typically, the two materials will be selected such that a difference in hardness between the harder and the softer material will be within the range of 15-45 Shore A.

### LIST OF REFERENCE NUMERALS USED

- 10: suction cup
- 20: lip
- 25: bellows
- 30: inner, central portion of lip 20
- 35: upper side of inner, central portion of lip 20
- 37: lower side of inner, central portion of lip 20
- 40: outer rim portion of lip 20
- 50: area of overlap
- 60: inner, central lower surface of outer rim portion of lip 20
- 70: outer, lower surface of inner, central portion of lip 20
- 80: cleat

## Claims

1. A suction cup (10) for use in automated gripping operations configured to be fluidly connected to a source of vacuum, comprising a first polymeric material of a first hardness, and a lip (20) having an outer rim portion (40) made of a second polymeric material of a second hardness, which second hardness of the second polymeric material is lower than the first hardness of the first polymeric material,
**characterized in that**
the lip exhibits an inner, central portion (30) made of the first polymeric material, the outer rim portion (40) of the lip (20) extends radially inwards, thereby forming an area of an overlap (50) with the central portion (30) of the lip (20) on an upper side (35) or on a lower side (37) of the central portion (30) of the lip (20), and, **in that**, in said area of the overlap (50), the first and second polymeric materials are bonded to each other.

2. The suction cup (10) of claim 1, wherein the outer rim portion (40) of the lip (20) extends radially inwards, thereby forming the area of the overlap (50) with the central portion (30) of the lip (20) on the upper side (35) of the central portion (30) of the lip (20).

3. The suction cup (10) of claim 1, wherein the outer rim portion (40) of the lip (20) extends radially inwards, thereby forming the area of the overlap (50) with the central portion (30) of the lip (20) on the lower side (37) of the central portion (30) of the lip (20).

4. The suction cup (10) of claim 2, wherein an inner central lower surface (60) of the outer rim portion (40) is essentially flush with an outer, lower surface (70) of the inner, central portion (30) of the lip (20).

5. The suction cup (10) of claim 2, wherein an inner central lower surface (60) of the outer rim portion (40) extends essentially in parallel with the upper side (35) of the central portion (30) of the lip (20).

6. The suction cup (10) of claim 4 or 5, wherein the inner central lower surface (60) of the outer rim portion (40) of the lip (20) exhibits cleats.

7. The suction cup (10) of any one of the claims 2-6, wherein a lower surface (70) of the inner, central portion (30) of the lip (20) exhibits cleats (80).

8. The suction cup (10) of any one of the previous claims, wherein the first and second polymeric materials are thermoplastic elastomers.

9. A method of producing a suction cup (10) having a lip (20), wherein the lip (20) is formed from two different polymeric materials, using 2-component injection moulding,
**characterized in**
injecting, into a cavity containing an inner, central portion (30) of the lip (20) made of a first polymeric material having a first hardness, a second polymeric material having a second hardness on an upper side (35) of the central portion (30) of the lip (20), so as to form an area of overlap (50) of the two polymeric materials, the second hardness being lower than the first hardness, thereby bonding the two polymeric materials to each other in said area of the overlap (50).

10. A method of producing a suction cup (10) having a lip (20), wherein the lip (20) is formed from two different polymeric materials, using 2-component injection moulding,
**characterized in**
injecting, into a cavity containing an inner, central portion (30) of the lip (20) made of a first polymeric material having a first hardness, a second polymeric material on a lower side (37) of the central portion (30) of the lip (20), so as to form an area of overlap (50) of the two polymeric materials, the second hardness being lower than the first hardness, thereby bonding the two polymeric materials to each other in said area of the overlap (50).
